# EUROPÄISCHE PATENTANMELDUNG

(11) **EP 2 105 633 A2**
(43) Veröffentlichungstag der Anmeldung: **30.09.2009**
(21) Anmeldenummer: 09165267.7
(22) Anmeldetag: 25.05.2007
(51) Int. Cl.: F16H 48/30, B60K 23/04

(54) **Getriebeeinheit zur Führung eines Antriebsmomentes von einer Antriebswelle auf zwei Abtriebswellen**

(30) Priorität: 30.05.2006 DE 102006025071
(62) Teilanmeldung aus: 07729518.6
(71) Anmelder: ZF Friedrichshafen AG, 88038 Friedrichshafen (DE)
(72) Erfinder: Böck, Alois, 84116, Hutthurm (DE); Baasch, Detlef, 88048, Ailingen (DE)

(57) **Zusammenfassung**

Es wird eine Getriebeeinheit zur Führung eines Antriebsmomentes von einer Antriebswelle (2) auf zwei Abtriebswellen (3,5) über eine Differenzialeinheit (15) und eine mittels eines Motors (37') zuschaltbare, stufenlos einstellbare Vorrichtung (14) zur Beeinflussung des Verteilungsgrades des Antriebsmoments auf die Abtriebswellen (3,5) vorgeschlagen, wobei der Motor (37') bezüglich einer Getriebemittelachse (Y), welche senkrecht zu einer Längsachse (X) der Abtriebswellen (3,5) verläuft, derart angeordnet ist, dass ein einen Motorwellenausgang (98) aufweisendes Motorende der Getriebemittelachse (Y) abgewandt ist und der Motor (37') das gegenüberliegende Schaltelement (77B) mittels einer Verbindungswelle (105) betätigt.

## Beschreibung

Die Erfindung betrifft eine Getriebeeinheit zur Führung eines Antriebsmomentes von einer Antriebswelle auf zwei Abtriebswellen nach der im Oberbegriff des Patentanspruches 1 näher definierten Art.

Eine solche Getriebeeinheit ist beispielsweise aus der FR 2 864 190 bekannt. Darin wird ein asymmetrisches Verteilergetriebe beschrieben, welches ein von einem Antriebsmotor erzeugtes Antriebsmoment mittels einer Differenzialeinheit auf zwei mit einer Abtriebswelle verbundene Räder verteilt. Ein Differenzial der Differenzialeinheit teilt das Antriebsmoment dabei gleichmäßig auf die beiden Abtriebswellen auf.

Um eine beispielsweise aufgrund von einer Kurvenfahrt benötigte andere Momentenaufteilung zu erreichen, ist jeder der beiden Abtriebswellen eine sogenannte Torque-Vectoring-Einheit mit einem ohne Hohlrad ausgebildeten Planetensatz zugeordnet, welche zwischen einem Differenzialkorb der Differenzialeinheit und der jeweiligen Abtriebswelle angeordnet ist und mit welcher das auf die jeweilige Abtriebswelle wirkende Antriebsmoment beeinflusst werden kann. Die jeweilige Abtriebswelle und der Differenzialkorb fungieren dabei als Sonnenräder des Planetensatzes, welche mit jeweils zwei auf den Planeten angeordneten Planetenrädern zusammenwirken. Der Steg des Planetensatzes kann zur Erzeugung eines so genannten Torque-Vectoring-Moments mittels einer Bremse gegenüber einem Getriebegehäuse abgebremst werden, wodurch das sich am Getriebegehäuse abstützende Torque-Vectoring-Moment mittels einer mit den Planeten und den Sonnenrädern des Planetensatzes realisierten Übersetzungsstufe auf das jeweilige Rad geführt wird.

Aus der US 2001/0047919 ist ein Mechanismus zur Abbremsung des Steges gegenüber dem Getriebegehäuse bekannt. Dabei wird mittels eines Elektro-Motors eine Einrichtung zur Axialeinstellung betätigt, welche mit einem mit dem Steg wechselwirkenden Schaltelement zusammenwirkt. Die Antriebswelle des Elektro-Motors wirkt dabei mit einem Zwischenrad zusammen, welches mit einem Schwenkrad der Einrichtung zur Axialeinstellung in Eingriff steht. Durch eine Verdrehung des Schwenkrades wird über sich in tiefenvariierenden Nuten des Schwenkrades und in damit korrespondierenden Nuten einer Kugelrampenscheibe befindliche Kugeln eine Axialbewegung der Kugelrampenscheibe bewirkt, welche das als Lamellenbremse ausgebildete Schaltelement betätigt.

Der Elektro-Motor weist eine Flanschfläche auf, über die er an dem Getriebegehäuse angeordnet ist, wobei die Flanschfläche an einer einer Getriebemitte zugewandten Seite des Elektro-Motors angeordnet ist und der Elektro-Motor von einer Getriebeaußenseite fest mit einer Flanschfläche des Getriebegehäuses verbunden ist.

Bei einer solchen Anordnung des Elektro-Motors nimmt dieser in einem Einbauzustand des Getriebes nachteilhafterweise eine exponierte Stellung ein, wodurch eine Sensorik und eine Verkabelung des Elektro-Motors besonders durch externe Bedingungen, wie beispielsweise die Abwärme eines Auspuffes, hohen Belastungen ausgesetzt sein kann.

Der vorliegenden Erfindung liegt die Aufgabe zugrunde, eine Getriebeeinheit zur Führung eines Antriebsmomentes von einer Antriebswelle auf zwei Abtriebswellen der eingangs genannten Art derart zu gestalten, dass ein Motor zur Beeinflussung des Verteilungsgrades des Antriebsmomentes auf die Abtriebswellen mit seinen Anschlüssen und Verkabelungen sicher, einfach und austauschbar mit der Getriebeeinheit verbunden ist und eine hohe Lebensdauer durch eine bezüglich der Belastung des Motors optimierte Anordnung aufweist.

Erfindungsgemäß wird diese Aufgabe mit einer Getriebeeinheit mit den Merkmalen des Patentanspruches 1 gelöst.

Es wird eine Getriebeeinheit zur Führung eines Antriebsmomentes von einer Antriebswelle auf zwei Abtriebswellen über eine Differenzialeinheit und eine mittels wenigstens eines Motors zuschaltbare, stufenlos einstellbare Vorrichtung zur Beeinflussung des Verteilungsgrades des Antriebsmoments auf die Abtriebswellen vorgeschlagen, wobei erfindungsgemäß vorgesehen ist, dass der Motor bezüglich einer Getriebemittelachse, welche senkrecht zu einer Längsachse der Abtriebswellen verläuft, derart angeordnet ist, dass ein einen Motorwellenausgang aufweisendes Motorende der Getriebemittelachse abgewandt ist.

Bei der erfindungsgemäßen Ausgestaltung der Getriebeeinheit ist der Motor hinsichtlich einer möglichst geringen Belastung beispielsweise seiner Sensorik und seiner Verkabelung durch insbesondere externe Belastungen, wie beispielsweise die Abwärme eines Auspuffes, in einem Einbauzustand der Getriebeeinheit optimiert angeordnet.

Eine besonders einfache Festlegung des Motors an dem Getriebegehäuse kann dadurch erreicht werden, dass das einen Motorwellenausgang aufweisende Motorende eine Flanschfläche zur Befestigung des Motors an einem Getriebegehäuse aufweist, wobei der Motor mittels einer Schraubverbindung über die Flanschfläche des Motors mit dem Getriebegehäuse verbunden ist. Weiters ist eine einfache Montage des Motors an dem Getriebegehäuse durchführbar, wenn der Motor bezüglich einer Getriebemittelachse von außen mit dem Getriebegehäuse verbunden werden kann.

Eine hinsichtlich der Luftanströmung optimierte Anordnung des Motors und eine dadurch verbesserte Kühlung des Motors in der Getriebeeinheit wird erreicht, wenn der wenigstens eine Motor im Einbauzustand in einem fahrzeugfrontseitigen Bereich der Hinterachsgetriebeeinheit angeordnet ist.

Dabei ist es zweckmäßig, wenn der wenigstens eine Motor im Einbauzustand in einem Bereich, welcher sich in Fahrzeugfrontrichtung hinter einer Einrichtung zur fahrzeugfesten Festlegung der Getriebeeinheit befindet, angeordnet ist.

Bei einer vorteilhaften Ausgestaltung einer erfindungsgemäßen Getriebeeinheit kann es vorgesehen sein, dass die Differenzialeinheit ein mit beiden Abtriebswellen verbundenes Differenzial und einen mit der Antriebswelle wirkverbundenen Differenzialkorb aufweist. Dabei kann eine besonders gute Momentenverteilung durch eine mit zwei bezüglich der Getriebemittelachse wenigstens annähernd symmetrisch angeordneten Torque-Vectoring-Einheiten ausgebildete Vorrichtung zur Beeinflussung des Verteilungsgrades des Antriebsmoments erzielt werden.

Weisen die beiden Torque-Vectoring-Einheiten jeweils eine Übersetzungsstufe auf, welche mit dem Differenzialkorb und der zugeordneten Abtriebswelle wirkverbunden sind, so kann eine besonders einfache Einleitung eines Beeinflussungsmomentes auf die jeweilige Abtriebswelle erreicht werden.

Eine sehr genaue Einstellung des Beeinflussungsmomentes auf die jeweilige Abtriebswelle wird erreicht, wenn die jeweilige Übersetzungsstufe mit einem nichtdrehenden, bezüglich der Übertragungsfähigkeit stufenlos einstellbaren, insbesondere reibschlüssigen Schaltelement der jeweiligen Torque-Vectoring-Einheit verbindbar ist, wobei die Übertragungsfähigkeit des jeweiligen Schaltelements über den wenigstens einen Motor einstellbar ist.

Wird zur Betätigung der beiden Torque-Vectoring-Einheiten ein an einer Torque-Vectoring-Einheit angeordneter Motor vorgesehen, welcher mittels einer Verbindungswelle das Schaltelement, welches auf der dem Motor bezüglich der Getriebemittelachse gegenüberliegenden Seite der Getriebeeinheit angeordnet ist, so ist eine kostengünstige Betätigung der Schaltelemente realisiert.

Je nach Anwendungsfall kann die Integration eines Motors erleichtert werden, wenn zur Betätigung der Schaltelemente der beiden Torque-Vectoring-Einheiten jeweils ein separater einer Torque-Vectoring-Einheit zugeordneter Motor vorgesehen ist. Weiterhin ist damit eine bessere Anpassung der gesamten Übersetzungskette von dem Motor zur geforderten Stellkraft an dem Schaltelement möglich und der Motor einer Torque-Vectoring-Einheit kann bereits betätigt werden, bevor sich der Motor der anderen Torque-Vectoring-Einheit bezüglich der Betätigung seines Schaltelementes in einer Neutralposition befindet.

Eine besonders schnelle und kraftarme Betätigung der Schaltelemente kann dadurch erreicht werden, dass die Schaltelemente als Lamellenbremsen ausgebildet sind, wobei die jeweilige Lamellenbremse mittels einer von dem wenigstens einen Motor betätigbaren Einrichtung zur Axialeinstellung betätigbar ist. Dabei kann es vorgesehen sein, dass die Antriebswelle des Motors mit einem Schwenkrad der Einrichtung zur Axialeinstellung mittels einer wenigstens einstufigen Stirnradstufe wechselwirkt, wobei das Schwenkrad mittels Wälzkörpern mit einer verdrehgesicherten und axial verschieblichen Kugelrampenscheibe der Einrichtung zur Axialeinstellung zusammenwirkt.

Der wenigstens eine Motor kann grundsätzlich ein elektrisches oder hydraulisches Antriebsaggregat sein, jedoch ist es besonders vorteilhaft, wenn der Motor als Elektro-Motor ausgebildet ist, da dadurch eine hohe Stellgenauigkeit, eine hohe Dynamik, eine sehr variable Auslegung und ein geringer Geräuschpegel bei geringen Kosten des Motors erreicht werden kann.

Eine erfindungsgemäß ausgestaltete Getriebeeinheit eignet sich besonders als Hinterachsgetriebeeinheit, wenngleich die erfindungsgemäße Getriebeeinheit prinzipiell nicht auf diese Anwendung beschränkt ist.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen.

Es zeigt:
- Fig. 1: eine schematische Schnittdarstellung einer Hinterachsgetriebeeinheit eines Kraftfahrzeugs mit einem Elektro-Motor, welcher eine Torque-Vectoring-Einheit einer Vorrichtung zur Beeinflussung eines Antriebsmoments auf zwei Abtriebswellen betätigt;
- Fig. 2: eine bereichsweise dreidimensionale Außenansicht der Hinterachsgetriebeeinheit der Fig. 1 und
- Fig. 3: eine bereichsweise schematische Schnittdarstellung einer alternativ gestalteten Hinterachsgetriebeeinheit mit einem zwei Torque-Vectoring-Einheiten betätigenden Motor.

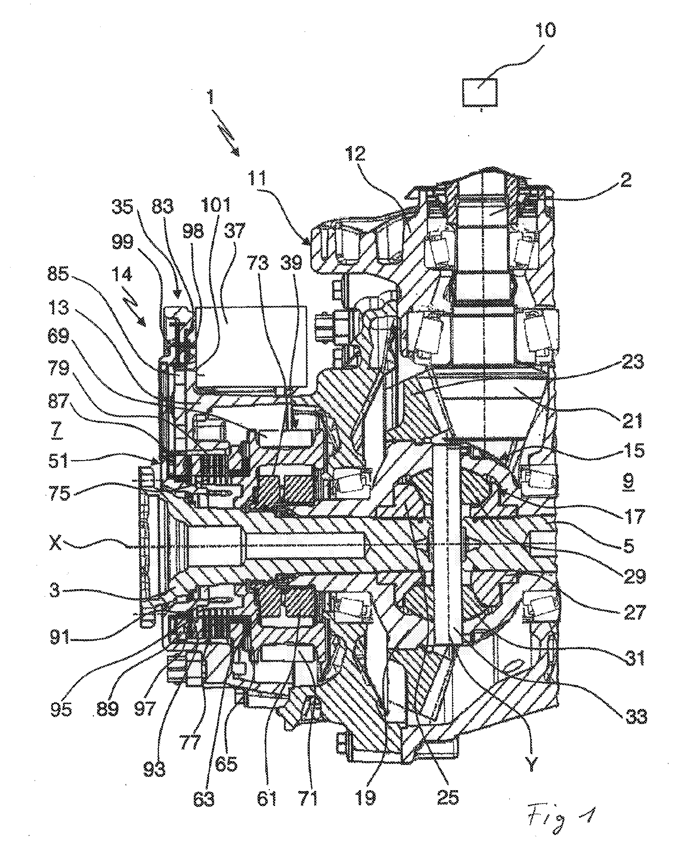

In Fig. 1 ist ein Bereich einer Getriebeeinheit 1 gezeigt, welche ein von einer nur schematisch dargestellten Antriebsmaschine bzw. Brennkraftmaschine 10 bereitgestelltes, über eine Antriebswelle 2 übertragenes Antriebsmoment auf eine erste Abtriebswelle 3 und eine hierzu koaxial und bezüglich der Antriebswelle 2 symmetrisch angeordnete zweite Abtriebswelle 5 verteilt.

Die Getriebeeinheit 1 ist zum Einbau in ein Kraftfahrzeug vorgesehen und ist in der gezeigten Ausführung als Hinterachsgetriebeeinheit ausgebildet, wobei jedoch auch denkbar ist, dass eine im Wesentlichen analog aufgebaute Getriebeeinheit als Vorderachsgetriebeeinheit eingesetzt wird. Ebenfalls denkbar ist ein Einsatz der vorliegenden Getriebeeinheit sowohl als Vorderachsgetriebeeinheit als auch als Hinterachsgetriebeeinheit, beispielsweise bei einem aliradgetriebenen Kraftfahrzeug.

Die Abtriebswellen 3 bzw. 5, welche um eine gemeinsame Längsachse X drehbar gelagert sind, sind an ihren freien Enden jeweils mit einem nicht näher dargestellten Fahrzeugrad verbunden, wobei sich im Einbauzustand der Hinterachsgetriebeeinheit 1 ein Fahrzeugrad bezüglich der Abtriebswelle 3 auf einer in Fahrzeugfrontrichtung betrachtet linken Getriebeseite 7 und ein Fahrzeugrad bezüglich der Abtriebswelle 5 auf einer rechten Getriebeseite 9 befindet.

Die Hinterachsgetriebeeinheit 1 beinhaltet ein Getriebegehäuse 11, welches mit einem im Wesentlichen die Antriebswelle 2 umgebenden vorderen Getriebegehäuseteil 12, mit einem der linken Getriebeseite 7 zugeordneten seitlichen Getriebegehäuseteil 13, aus dem die erste Abtriebswelle 3 seitlich herausragt, und mit einem nicht näher dargestellten der rechten Getriebeseite 9 zugeordneten seitlichen Getriebegehäusetell, aus dem die zweite Abtriebswelle 5 seitlich herausragt, ausgebildet ist.

Die Hinterachsgetriebeeinheit 1 verteilt das von der Antriebswelle 2 übertragene Antriebsmoment auf die beiden Abtriebswellen 3 und 5 und kann dabei auch eine ungleiche Momentenverteilung auf die beiden Abtriebswellen 3 und 5 bewirken und somit aktiv die Fahreigenschaften verbessern. Dabei wird das Antriebsmoment von der Antriebswelle 2 in eine Differenzialeinheit 15 eingeleitet, welche mit einem Differenzial 17 und einem Differenzialkorb 19 ausgebildet und mit einer Vorrichtung 14 zur Beeinflussung des Antriebsmoments auf die Abtriebswellen 3 und 5 verbunden ist.

Zur Wirkverbindung zwischen der Antriebswelle 2 und dem Differentialkorb 19 steht ein fest mit der Antriebswelle 2 verbundenes Antriebsritzel 21 mit einem fest mit dem Differenzialkorb 19 verbundenen Tellerrad 23 in Eingriff, wobei der Differenzialkorb 19 drehbar um die Längsachse X gelagert ist und sich in dem Getriebegehäuse 11 abstützt.

Das Differenzial 17 ist in an sich bekannter Bauweise mit zwei mit der jeweiligen Abtriebswelle 3 bzw. 5 verbundenen abtriebsseitigen Kegelrädern 25 und 27 und mit zwei mit den beiden Kegelrädern 25 und 27 kämmenden antriebsseitigen Kegelrädern 29 und 31 ausgebildet. Die beiden antriebsseitigen Kegelräder 29 und 31 sind drehbar auf einem Bolzen 33 angeordnet, welcher in dem Differenzialkorb 19 bezüglich einer Drehung um die Längsachse X festgelegt und bezüglich einer Drehung um eine senkrecht zu der Längsachse X durch den Bolzen 33 drehbar gelagert ist.

Die Fig. 1 zeigt zwei Ausführungsbeispiele der antriebsseitigen Kegelräder 29 und 31 und der damit zusammenwirkenden abtriebsseitigen Kegelräder 25 und 27, welche jeweils miteinander in Eingriff stehen und zwischen welchen der Fachmann entsprechend dem jeweiligen Anwendungsfall eine Alternative auswählen kann.

Wird von der Brennkraftmaschine 10 ein Antriebsmoment über die Antriebswelle 2 übertragen, so wird dieses über das Antriebsritzel 21 auf das Tellerrad 23 und den fest damit verbundenen Differenzialkorb 19 übertragen. Mittels des mit dem Differenzialkorb 19 verbundenen Bolzens 33 des Differenzials 17 wird das Antriebsmoment auf die antriebsseitigen Kegelräder 29 und 31 des Differenzials 17 übertragen, welche das Antriebsmoment wiederum auf die abtriebsseitigen Kegelräder 25 und 27 des Differenzials 17 leiten und somit die Abtriebswellen 3 und 5 antreiben.

Liegt keine Differenzdrehzahl zwischen den beiden Abtriebswellen 3 und 5 vor, so drehen sich die antriebsseitigen Kegelräder 29 und 31 mit dem Bolzen 33 ausschließlich um die Längsachse X. Sollte eine Abtriebswelle im Einbauzustand beispielsweise aufgrund der sich bei einer Kurvenfahrt unterschiedlich schnell drehenden Fahrzeugräder schneller rotieren als die andere, dann drehen sich die antriebsseitigen Kegelräder 29 und 31 zum Ausgleich der Drehzahldifferenz um den Bolzen 33, wobei der Bolzen 33 weiterhin das Antriebsmoment über seine Drehung um die Längsachse X auf die beiden Abtriebswellen 3, 5 weiterleitet.

Neben einem Ausgleich einer unterschiedlichen Drehzahl der beiden Abtriebswellen 3 und 5 kann mit der Hinterachsgetriebeeinheit 1 eine unterschiedliche Momentenaufteilung auf die beiden Abtriebswellen 3 und 5 erreicht werden. Dazu ist die Vorrichtung 14 zur Beeinflussung des Antriebsmoments auf die Abtriebswellen 3 bzw. 5 mit zwei symmetrisch zu der Getriebemittelachse Y angeordneten baugleichen Torque-Vectoring-Einheiten vorgesehen, wobei von den zwei Torque-Vectoring-Einheiten in Fig. 1 nur die der linken Getriebeseite 7 zugeordnete Torque-Vectoring-Einheit 35 dargestellt ist, welche im Folgenden beschrieben wird.

Die Torque-Vectoring-Einheiten sind in dem Getriebegehäuse 11 angeordnet und werden vorliegend von jeweils einem zugeordneten, zuschaltbaren Elektro-Motor 37 stufenlos eingestellt und betätigt.

Wie bei der dargestellten Torque-Vectoring-Einheit 35 zu sehen ist, weist diese einen als Übersetzungsstufe 39 ausgebildeten Planetensatz ohne Hohlrad und eine von dem Elektro-Motor 37 betätigbare Bremsvorrichtung 51 auf, wobei die Übersetzungsstufe 39 mit zwei Sonnenrädern 61 und 63 ausgebildet ist, wovon ein erstes Sonnenrad 61 fest mit dem Differenzialkorb 19 und wovon ein zweites Sonnenrad 63 fest mit der Abtriebswelle 3 verbunden ist. Die Sonnenräder 61 und 63 wirken mit vorliegend drei drehend auf einem Planetenträger 65 gelagerten Planeten zusammen, von denen zwei Planeten 69 und 71 ersichtlich sind, und welche eine durchgängige Verzahnung 73 aufweisen.

Die Bremsvorrichtung 51 weist ein als Lamellenbremse 77 ausgebildetes Lamellenschaltelement auf. Die bezüglich ihrer Übertragungsfähigkeit stufenlos einstellbare Lamellenbremse 77 weist als Lamellen an dem Planetenträger 65 angeordnete Innenlamellen 75 auf, welche mit in dem Getriebegehäuse 11 festgelegten Außenlamellen 79 durch ihre axiale Verstellbarkeit derart zusammenwirken, dass sie in oder aus einem Reibkontakt bringbar sind.

Der Elektro-Motor 37 betätigt die Bremsvorrichtung 51 vorliegend über ein von seiner Antriebswelle 83 angetriebenes, getriebegehäusefest gelagertes Zwischenrad 85, welches mit der Antriebswelle 83 des Elektro-Motors 37 in Eingriff steht und eine Einrichtung 87 zur Axialeinstellung der Lamellenbremse 77 betätigt. Die Einrichtung 87 zur Axialeinstellung der Lamellenbremse 77 ist bei der gezeigten Ausführung aus einem Schwenkrad 89, welches mit dem Zwischenrad 85 in Eingriff steht und wie das Zwischenrad 85 auf der der Getriebemittelachse Y abgewandten Seite der Lamellenbremse 77 angeordnet ist, und einer zwischen dem Schwenkrad 89 und der Lamellenbremse 77 angeordneten Kugelrampenscheibe 91 aufgebaut.

Das Zwischenrad 85 dient zur Einstellung einer Übersetzung zwischen dem Elektro-Motor 37 und dem Schwenkrad 89, welche durch eine Zähnezahl des Elektro-Motors 37 und eine Zähnezahl des Schwenkrades 89 bestimmt ist, und zur Überbrückung des Abstandes des Elektro-Motors 37 von der Längsachse X, wobei der Abstand insbesondere durch den Durchmesser des Zwischenrades 85 überbrückt wird.

Es bleibt dem Fachmann überlassen, zur Überbrückung des Abstandes zwischen dem Elektro-Motor und der Längsachse neben der im Ausführungsbeispiel als Zwischenrad ausgebildeten einstufigen Stirnradstufe entsprechend den insbesondere bauräumlichen Bedingungen auch eine zweistufige oder mehrstufige Stirnradstufe einzusetzen.

Die Kugelrampenscheibe 91, welche drehfest und axialverschieblich in dem Getriebegehäuse 11 gelagert ist und wie das Schwenkrad 89 um die Abtriebswelle 3 angeordnet ist, weist über ihren Radius verteilt drei in ihrer Tiefe variierende Nuten 93 auf. In mit den Nuten 93 der Kugelrampenscheibe 91 korrespondierenden ebenfalls in ihrer Tiefe variierende Nuten 95 des Schwenkrades 89 befinden sich drei als Kugeln 97 ausgebildete Wälzkörper, über welche bei einem durch den Elektro-Motor 37 verursachten Verdrehen des Schwenkrades 89 eine Axialbewegung der Kugelrampenscheibe 91 resultiert, so dass bei einer Axialbewegung in Richtung der Y-Achse die gehäusefesten Außenlamellen 79 nach Überwindung eines Lüftspieles der Einrichtung zur Axialstellung 87 mit den Innenlamellen 75 der Kupplungseinrichtung 51 eine Reibverbindung eingehen.

In einem offenen Zustand der Lamellenbremse 77 läuft die Übersetzungsstufe 39 ohne Momentenübertragung um die Längsachse X um. Wird über den Elektro-Motor 37 eine Reibverbindung in der Lamellenbremse 77 ausgelöst, so wird aus dem Antriebsmoment ein auf die jeweilige Abtriebswelle 3 bzw. 5 wirkendes Torque-Vectoring-Moment erzeugt. Dies geschieht durch eine Abstützung des Planetenträgers 65 über die Bremsvorrichtung 51 in dem Getriebegehäuse 11. Es wird somit eine Momentenübertragung von der Antriebswelle 2 über den Differenzialkorb 19 und von dort mittels des Planetenträgers 65 von dem ersten Sonnenrad 61 auf das jeweilige mit der Abtriebswelle 3 bzw. 5 verbundene zweite Sonnenrad 63 erzeugt, mittels welcher eine unterschiedliche Momentenverteilung auf die linke Abtriebswelle 3 und die rechte Abtriebswelle 5 erreicht werden kann.

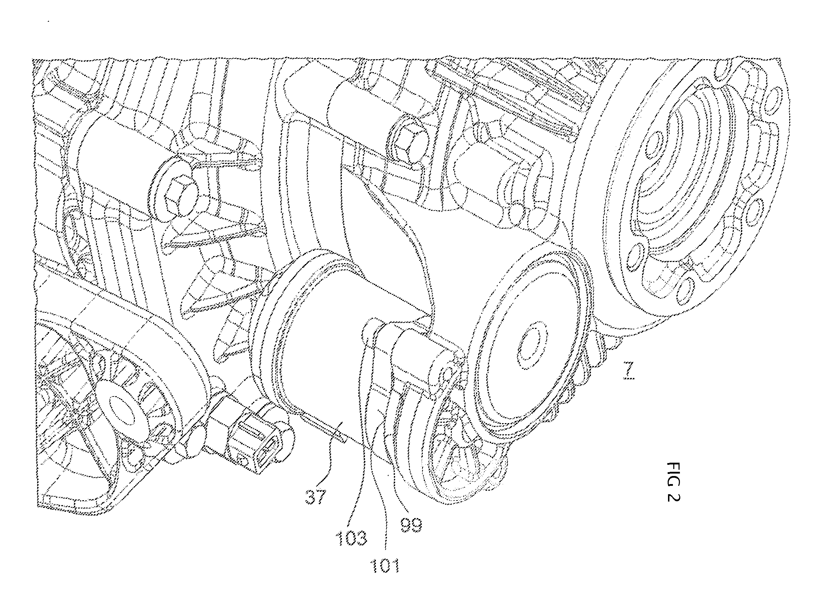

Wie auch der Fig. 2 zu entnehmen ist, ist der Elektro-Motor 37 an seinem einen Motorwellenausgang 98 aufweisenden Motorende mit einer Flanschfläche 99 an einer Flanschfläche 101 des Getriebegehäuses 11, welche in Richtung der Getriebemittelachse Y zeigt, mittels einer Schraubverbindung 103 derart befestigt, dass der Elektro-Motor 37 von der Flanschfläche 101 des Getriebegehäuses 11 aus zur Getriebemittelachse Y zeigt. Der Elektro-Motor 37 kann somit einfach von außen an dem Getriebegehäuse 11 montiert werden.

In Richtung der Getriebemittelachse Y ist der Elektro-Motor 37 in einem in Richtung seiner Antriebswelle 83, d. h. in einem im Einbauzustand fahrzeugfrontseitig vor der Hinterachsgetriebeeinheit 1 liegenden Bereich des Kraftfahrzeugs, angeordnet, wodurch an dem Elektro-Motors 37 gute Luftanströmbedingungen vorherrschen und somit eine gute Kühlung des Elektro-Motors 37 erreicht werden kann. Der Elektro-Motor 37 nimmt im Einbauzustand durch seine Festlegung in einem hinter einer nicht näher dargestellten fahrzeugfesten Befestigungseinrichtung des Getriebegehäuses 11 liegenden Bereich an dem Kraftfahrzeug zudem keine exponierte Stellung ein, wodurch eine nicht näher dargestellte Sensorik und Verkabelung des Elektro-Motors 37 vor externen Einflüssen geschützt ist.

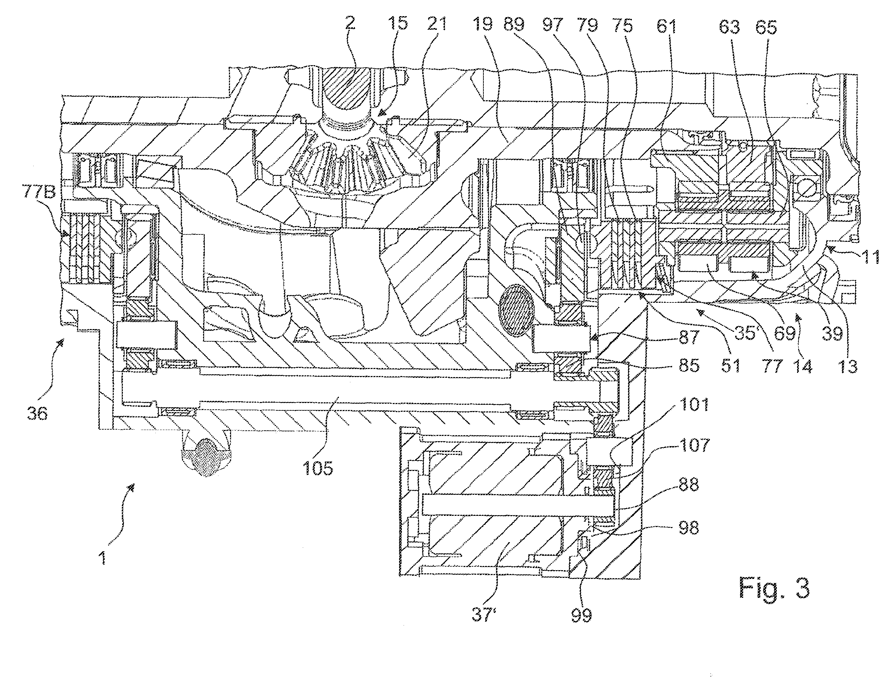

Die Fig. 3 zeigt ein Ausführungsbeispiel mit beiden symmetrisch zur Getriebemittelachse Y angeordneten Torque-Vectoring-Einheiten 35' und 36, wobei im Unterschied zu der in Fig. 1 dargestellten Hinterachsgetriebeeinheit 1 nur ein Elektro-Motor 37' zur Betätigung beider Torque-Vectoring-Einheiten 35', 36 vorgesehen ist.

Der Elektro-Motor 37', welcher analog zu dem in Fig.1 gezeigten Ausführungsbeispiel an dem Getriebegehäuse 11' im Bereich einer ersten Torque-Vectoring-Einheit 35' festgelegt ist, ist zum Betätigen der sich bezüglich der Getriebemittelachse Y auf der anderen Getriebeseite 9 befindlichen zweiten Torque-Vectoring-Einheit 36 über eine in dem Getriebegehäuse 11' gelagerte Verbindungswelle 105 verbunden.

Die Verbindungswelle 105 wird dabei von der Antriebswelle 83' des Elektro-Motor 37' mittels eines getriebegehäusefest gelagerten Zwischenrades 107 angetrieben, wobei die Verbindungswelle 105 das Antriebsmoment des Elektro-Motors 37' über ein Zwischenrad 85 der zweiten Torque-Vectoring-Einheit 36 auf diese überträgt.

Aus einer Neutralposition heraus, kann der Elektro-Motor 37' entsprechend der Drehrichtung seiner Antriebswelle 83' die Kugelrampenscheibe 91 der ersten Torque-Vectoring-Einheit 35' bzw. die Kugelrampenscheibe 91 der zweiten Torque-Vectoring-Einheit 36 verdrehen und dadurch die Lamellenbremse 77 der ersten Torque-Vectoring-Einheit 35' bzw. eine Lamellenbremse 77B der zweiten Torque-Vectoring-Einheit 36 zur Übertragung eines Torque-Vectoring-Moments auf die jeweilige Abtriebswelle 3 bzw. 5 betätigen.

### Bezugszeichen

- 1: Hinterachsgetriebeeinheit
- 2: Antriebswelle
- 3: erste Abtriebswelle
- 5: zweite Abtriebswelle
- 7: linke Getriebeseite
- 9: rechte Getriebeseite
- 10: Brennkraftmaschine
- 11: Getriebegehäuse
- 12: vorderer Getriebegehäuseteil
- 13: seitlicher Getriebegehäuseteil
- 14: Vorrichtung zur Beeinflussung des Antriebsmoments auf die Abtriebswellen
- 15: Differenzialeinheit
- 17: Differenzial
- 19: Differenzialkorb
- 21: Antriebsritzel
- 23: Tellerrad
- 25: linkes abtriebsseitiges Kegelrad
- 27: rechtes abtriebsseitiges Kegelrad
- 29: oberes antriebsseitiges Kegelrad
- 31: unteres antriebsseitiges Kegelrad
- 33: Bolzen
- 35: linke Torque-Vectoring-Einheit
- 35': linke Torque-Vectoring-Einheit
- 36: rechte Torque-Vectoring-Einheit
- 37: Elektro-Motor
- 37': Elektro-Motor
- 39: Übersetzungsstufe
- 51: Bremsvorrichtung
- 61: erstes Sonnenrad
- 63: zweites Sonnenrad
- 65: Planetenträger
- 69: Planet
- 71: Planet
- 73: Verzahnung Planet
- 75: Innenlamellen
- 77: Lamellenbremse der linken Torque-Vectoring-Einheit
- 77B: Lamellenbremse der rechten Torque-Vectoring-Einheit
- 79: Außenlamellen
- 83: Antriebswelle Elektro-Motor
- 83': Antriebswelle Elektro-Motor
- 85: Zwischenrad
- 87: Einrichtung zur Axialeinstellung
- 89: Schwenkrad
- 91: Kugelrampenscheibe
- 93: Nuten der Kugelrampenscheibe
- 95: Nuten des Schwenkrades
- 97: Kugeln
- 98: Motorwellenausgang
- 99: Flanschfläche des Elektro-Motors
- 101: Flanschfläche des Getriebegehäuses
- 103: Schraubverbindung
- 105: Verbindungswelle
- 107: Zahnrad
- X: Längsachse
- Y: Getriebemittelachse

## Patentansprüche

1. Getriebeeinheit, insbesondere Hinterachsgetriebeeinheit, zur Führung eines Antriebsmomentes von einer Antriebswelle (2) auf zwei Abtriebswellen (3, 5) über eine Differenzialeinheit (15) und eine mittels eines Motors (37, 37') zuschaltbare, stufenlos einstellbare Vorrichtung (14) zur Beeinflussung des Verteilungsgrades des Antriebsmoments auf die Abtriebswellen (3, 5), **dadurch gekennzeichnet, dass** der Motor (37, 37') bezüglich einer Getriebemittelachse (Y), welche senkrecht zu einer Längsachse (X) der Abtriebswellen (3, 5) verläuft, derart angeordnet ist, dass ein einen Motorwellenausgang (98) aufweisendes Motorende der Getriebemittelachse (Y) abgewandt ist, wobei die Vorrichtung (14) zur Beeinflussung des Verteilungsgrades des Antriebsmoments mit zwei bezüglich der Getriebemittelachse (Y) wenigstens annähernd symmetrisch angeordneten Torque-Vectoring-Einheiten (35, 35', 36) ausgebildet ist. Und die Torque-Vectoring-Einheiten (35, 35', 36) jeweils eine Übersetzungsstufe (39) aufweisen, welche mit dem Differenzialkorb (19) und der zugeordneten Abtriebswelle (3, 5) wirkverbunden sind und die jeweilige Übersetzungsstufe (39) mit einem nichtdrehenden, bezüglich der Übertragungsfähigkeit stufenlos einstellbaren, insbesondere reibschlüssigen Schaltelement (77, 77B) der jeweiligen Torque-Vectoring-Einheit (35, 35', 36) verbindbar ist, wobei die Übertragungsfähigkeit des jeweiligen Schaltelements (77, 77B) über einen Motor (37, 37') einstellbar ist und zur Betätigung der beiden Torque-Vectoring-Einheiten (35', 36) ein an einer Torque-Vectoring-Einheit (35', 36) angeordneter Motor (37') vorgesehen ist, wobei der Motor (37') das Schaltelement (77), welches auf der dem Motor (37') bezüglich der Getriebemittelachse (Y) gegenüberliegenden Seite der Getriebeeinheit (1) angeordnet ist, mittels einer Verbindungswelle (105) betätigt.
